(19) Europäisches Patentamt
European Patent Office
Office européen des brevets

(11) **EP 1 989 807 B1**

(12) **FASCICULE DE BREVET EUROPEEN**

(45) Date de publication et mention de la délivrance du brevet:
**02.05.2018 Bulletin 2018/18**

(21) Numéro de dépôt: **07726553.6**

(22) Date de dépôt: **28.02.2007**

(51) Int Cl.:
**H04L 1/00** [(2006.01)]

(86) Numéro de dépôt international:
**PCT/EP2007/051917**

(87) Numéro de publication internationale:
**WO 2007/099130 (07.09.2007 Gazette 2007/36)**

(54) **PROCEDE ET SYSTEME PERMETTANT DE TRANSMETTRE UN MESSAGE S' EXPRIMANT AU MOYEN D' UN POLYNOME**

VERFAHREN UND SYSTEM ZUR ÜBERTRAGUNG EINER NACHRICHT, DIE MITTELS EINES POLYNOMS AUSGEDRÜCKT WIRD

METHOD AND SYSTEM FOR TRANSMITTING A MESSAGE EXPRESSED BY MEANS OF A POLYNOMIAL

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **28.02.2006 FR 0601775**

(43) Date de publication de la demande:
**12.11.2008 Bulletin 2008/46**

(73) Titulaire: **THALES**
**92400 Courbevoie (FR)**

(72) Inventeurs:
• **PAINCHAULT, Philippe**
**F-92600 Asnieres (FR)**
• **AGAGLIATE, Sandrine**
**F-75001 Paris (FR)**
• **GARRIDO, Eric**
**F-95230 Soisy /montmorency (FR)**

(74) Mandataire: **Dudouit, Isabelle**
**Marks & Clerk France**
**Conseils en Propriété Industrielle**
**Immeuble " Visium "**
**22, avenue Aristide Briand**
**94117 Arcueil Cedex (FR)**

(56) Documents cités:
**GB-A- 1 468 999     US-A1- 2002 120 592**

• **Stephen B. Wicker, Vijay Bhargava: "An introduction to Reed-Solomon codes" In: Stephen B. Wicker, Vijay Bhargava: "Reed-Solomon Codes and Their Applications", September 1999 (1999-09), Wiley - IEEE Press ISBN: 9780780353916 pages 1-16, * page 16 ***

**Description**

L'invention concerne notamment un procédé et un système de gestion des interruptions lors de la réception d'un signal dans un système de transmission.

L'un des problèmes posés dans les systèmes de transmission d'information est la manière de gérer les pertes d'information dues aux interruptions dans la communication, interruptions qui peuvent être erratiques.

Suite à une émission ou à une réception « erratique », un récepteur peut ne pas avoir accès à plusieurs paquets du message transmis et ne pas pouvoir émettre de requête en direction de l'émetteur pour demander les paquets manquants.

Les pertes de paquets n'étant pas prédictibles, le message peut être transmis plusieurs fois pour éviter des pertes d'informations. Une méthode simple consiste, par exemple, à répéter le message. Le récepteur perdant plusieurs paquets doit écouter, éventuellement plusieurs fois, la totalité du message. Pour des messages longs et/ou dans le cas de faible largeur de bande passante, cette manière d'opérer peut devenir problématique. Dans tous les cas, elle conduit à une perte de temps importante.

Le document de Stephen B.Wickler intitulé « An introduction to Reed-Solomon codes » ; In :Wicker, Bhargava : « Reed-Solomon Codes and their Applications », septembre 1999 (1999-09), Wiley -IEEE Press, ISBN :9780780353916, pages 1-16, XP7918388 décrit l'utilisation d'un code de Reed-Solomon pour effectuer des corrections d'erreurs.

L'invention concerne un procédé pour gérer des interruptions erratiques dans un système de transmission où les messages M à transmettre sont composés de paquets de données et sont représentés par un polynôme de degré $t-1$, un message contenant une signalisation CO, les émetteurs et les récepteurs partageant une information permettant de référencer chaque paquet de données, telle qu'une page ou une référence temporelle, le procédé étant tel qu'il comporte au moins les étapes suivantes :

- au cours de la transmission d'un message C représenté par un polynôme P, générer $t'$ points $A_i$ à partir de ladite information permettant de référencer les paquets de données et les évaluations $P(A_i)$ du polynôme P pour les points $A_i$ avec $t'$ supérieur ou égal à $t$,
- transmettre un message contenant une signalisation CO, la signalisation étant composée de $T0*N0$ bits et étant vue comme un polynôme de degré $(T0-1)$,
- à la réception collecter TO paquets de données ne contenant pas d'erreur, et chaque paquet de données utilisant un point différent des autres paquets de données, reconstituer la signalisation CO à partir de ces paquets de données en utilisant une interpolation polynomiale,
- déduire à partir de la signalisation CO, la longueur du message C et la manière dont on a découpé le message C en F trames, chaque trame étant découpée en q mots, chacun des mots étant représenté par un polynôme de degré $(T-1)$,
- pour chaque polynôme correspondant à un mot collecter T évaluations $P(A_i)$ sans erreur, et
- à partir des $P(A_i)$ et des points $A_i$ reconstituer le message C en utilisant l'interpolation polynomiale.

On peut utiliser une fonction d'interpolation pour déterminer le polynôme.

Le message est, par exemple, divisé en plusieurs parties et on applique les étapes du procédé décrit précédemment sur chaque partie.

Lors de la détection d'erreur, les évaluations $P(A_i)$ contenues dans un paquet de données erroné sont, par exemple, supprimées et le récepteur reste à l'écoute de nouveaux paquets de données. Ces paquets de données sont par exemple des pages.

Les étapes du procédé s'appliquent dans un système de transmission comprend un satellite de communication.

L'invention concerne aussi un système pour gérer des interruptions erratiques dans un système de transmission comprenant un ou plusieurs émetteurs $E_j$ et un ou plusieurs récepteurs $R_k$, où les messages à transmettre sont composés de paquets de données et s'expriment au moyen d'un polynôme de degré $t-1$, les émetteurs et les récepteurs partageant une information permettant de référencer les paquets de données caractérisé en ce qu'il comporte au moins les éléments suivants : un centre de formatage et les récepteurs étant pourvus de moyens adaptés à exécuter les étapes du procédé énoncé.

Le procédé selon l'invention présente notamment les avantages suivants :

- Il offre une résistance aux interruptions éventuelles lors de la transmission d'informations,
- Il permet d'augmenter la bande passante apparente en prenant en compte la diversité des émetteurs.

D'autres caractéristiques et avantages de la présente invention apparaîtront mieux à la lecture de la description qui suit d'un exemple de réalisation donné à titre illustratif et nullement limitatif annexé des figures qui représentent :

- La figure 1 un exemple d'architecture d'un système pour lequel s'applique l'invention, et
- La figure 2 le multiplexage des informations concernant le message et de la signalisation lorsqu'elle existe.

Afin de mieux faire comprendre le principe mis en oeuvre dans l'invention, la description est donnée à titre illustratif pour un système comprenant un ou plusieurs émetteurs $E_j$, un centre 1 de gestion ou de formatage des messages et un ou plusieurs récepteurs $R_k$. Le centre de formatage 1 est équipé d'un processeur 2 adapté à exécuter les étapes du procédé selon l'invention détaillées ci-après et à générer des signaux. Les récepteurs sont aussi pourvus de moyens tels que des microprocesseurs (non représentés pour des raisons de simplification) adaptés à exécuter les calculs mis en oeuvre dans le procédé.

Le centre de gestion 1 formate les messages dans des paquets de données appelés « pages ». Il transmet les paquets de données ou pages à un ou plusieurs émetteurs, les émetteurs transmettant ces derniers aux récepteurs.

Dans le cadre de l'exemple, on fait l'hypothèse que les émetteurs et les récepteurs partagent une information appelée « [page ref] », permettant ainsi de référencer chaque page. Cette information peut être, par exemple, une référence temporelle connue par chacun (émetteurs et récepteurs), ou un champ spécifique inclus dans la page comme un numéro de page. De manière générale, toute information permettant de référencer un paquet de données pourra être utilisée.

De manière simplifiée, le procédé selon l'invention repose sur le principe suivant : un message M qui doit être transmis à un ou plusieurs récepteurs est décomposé par le centre de formatage en t symboles $s_0, s_1, ..., s_{t-1}$.

Chaque symbole $s_i$ est représenté par un élément dans un corps fini GF, c'est-à-dire dans un ensemble GF ayant un nombre fini d'éléments et muni de 2 opérations + (l'addition) et * (la multiplication). Pour des raisons de simplifications, on fait l'hypothèse que ce corps fini est $GF(2^n)$, c'est-à-dire le corps ayant $2^n$ éléments (sans sortir du cadre de l'invention tout corps fini peut convenir). Ainsi les symboles sont composés de n bits et la taille du message M est de n*t bits.

Le message M est représenté par le polynôme :

$$P(X) = s_0 + s_1 X + s_2 X^2 + ... + s_{t-1} X^{t-1}$$

à coefficients dans $GF(2^n)$.

L'idée de la présente invention utilise notamment des évaluations du polynôme P en t points distincts $A_0$, $A_1,...,A_{t-1}$, c'est-à-dire $P(A_0)$, $P(A_1)$, ..., $P(A_{t-1})$, pour déterminer les t coefficients $s_0, s_1, ..., s_{t-1}$. du polynôme représentant le message. Ces évaluations $P(A_i)$ sont des symboles de n bits dans $GF(2^n)$. Le centre de formatage va remplir les pages (ou paquets de message) avec des évaluations du polynôme P en plusieurs points Ai différents. Le nombre d'évaluations de polynôme $P(A_i)$ est notamment choisi en fonction du degré du polynôme.

Cette façon de procéder n'affecte pas le nombre total de bits (n*t) que le récepteur mémorise de façon à reconstituer l'ensemble du message M.

Le centre de formatage 1 génère plusieurs points Ai à partir du paramètre [page ref] d'une page. Pendant la session entière de la transmission du message, (session entière qui correspond à la transmission du message d'un émetteur vers un récepteur) le centre de formatage génère des points qui sont différents pour chaque page (ou qui ont une grande probabilité d'être différents). En particulier, le centre génère plus de (n*t) points Ai et évaluations du polynôme P(Ai) pour les points Ai correspondants. Le nombre de points générés dépend de la longueur de la session. Le(s) émetteur(s) envoie(nt) les évaluations P(Ai) au(x) récepteur(s).

Ainsi, un récepteur Ri a uniquement à mémoriser t différentes évaluations P(Ai) pour être capable de reconstituer la totalité du message M, ceci, quels que soient les instants où il les reçoit (qu'il y ait des interruptions ou non dans la réception des pages). Le nombre minimum t qu'un récepteur doit mémoriser est fonction du degré du polynôme utilisé pour le message. L'indicateur [page ref] permet au récepteur de calculer les points Ai correspondant aux évaluations P(Ai) qu'il reçoit.

Si le récepteur est capable d'écouter en parallèle plusieurs émetteurs, et que chacun d'eux envoie des évaluations différentes, alors le temps de réception nécessaire pour récupérer t évaluations correspond aux temps de réceptions s'il n'y avait qu'un seul récepteur, divisé par le nombre de récepteurs.

**Etapes de reconstitution du message**

Pour reconstituer le message, un récepteur doit avoir acquis au moins t évaluations d'un polynôme P valables correspondant à t points distincts $A_0$, $A_1,...,A_{t-1}$ avec, $z_0 = P(A_0)$, $z_1 = P(A_1)$, ..., $z_{t-1} = P(A_{t-1})$, qui sont des éléments du corps fini GF.

La validité des points est contrôlée, par exemple, en utilisant des méthodes connues de l'Homme du métier dont des exemples sont donnés ci-après.

Connaissant les points et les évaluations correspondantes, il utilise par exemple l'interpolation du polynôme de Lagrange $L_i(X)$ pour déterminer le polynôme P de la manière suivante :

$$P(X)=z_0 * L_0(X) + z_1 * L_1(X) + …+ z_{t-1} * L_{t-1}(X)$$

où, pour $0 <= j <= t-1$, $L_j(X)$ est l'unique polynôme de degré (t-1) tel que $L_j(A_k)=1$ pour j=k et $L_j(A_k)=0$ pour j<>k Concrètement, le polynôme $L_j(X)$ se calcule de la façon suivante :

$$L_j(X)=B(j)*(\text{le produit de t-1 monômes } (X-A_k), \text{ tel que } 0<= k <= t-1 \text{ et } k<>j)$$

$B(j)$ est l'élément de $GF(2^n)$ qui est l'inverse dans $GF(2^n)$ du produit des t-1 elements $(A_j - A_k)$ pour $0<= k <= t-1$ et k<>j.

Connaissant le polynôme, un récepteur connaît alors le message.

Les étapes de traitement décrites ci-dessus s'appliquent pour des messages suffisamment courts.

Pour les longs messages, il est possible de découper ce message en parties ayant une longueur « adéquate » et d'appliquer le principe de base sur chacune des parties. La description détaillée d'un exemple de réalisation ci-dessous indique, entre autre, une manière pour choisir les différents paramètres pour avoir une longueur adéquate des parties du message.

Par ailleurs, le récepteur doit être capable de détecter les erreurs éventuelles dues à une mauvaise transmission ou réception des pages. Un mécanisme de correction d'erreur n'est pas obligatoire, une simple détection d'erreur est suffisante. Les pages erronées seront simplement effacées par le récepteur, et celui-ci devra rester à l'écoute de(s) émetteur(s) pour récupérer d'autres pages (n'importe lesquelles).

La suite de la description donne un exemple appliqué à un message C transmis à un récepteur pendant une session, le récepteur n'ayant pas d'information prédéfinie sur le message C (longueur, nature, etc.)

Il est alors nécessaire de transmettre aussi une signalisation CO contenant l'information utile au sujet de C.

Le format de page est, par exemple, le suivant :

[Page ref] [champ de Signalisation] [champ de message utile] [MAC / CRC].

Où

- [Page ref] indique le numéro de page qui identifie la page. Ce paramètre peut aussi être utilisé pour chiffrer la page en mode "compteur",

- [Champ Signalisation] donne une information sur la signalisation CO,

- [champ message utile] donne une information sur le message C,

- [MAC / CRC] contient un MAC (« Message Authentication Code ») ou un CRC («Cyclic Redundancy Check») permettant de détecter les erreurs au niveau de la page. Il peut aussi être utilisé pour l'authentification.

Une façon simple d'implémenter le principe de diversité comprend, par exemple, les étapes suivantes :

- la donnée utile d'une page est composée de $N\_p=N0+q*N$ bits, i.e, composé de N0 bits pour le champ [Champ Signalisation] et q paquets de N bits pour le champ [champ message utile]. Les paramètres (N0, N, q) sont discutés après dans la description,

- la signalisation CO est composée par exemple de $T0*N0$ bits et est vue comme un polynôme de degré (TO-1) dans $GF(2^{N0})$. Le champ [champ signalisation] d'une page contient une évaluation du polynôme en un point, ce point étant calculé à partir de [page ref],

- le message C est composé de F trames, chaque trame est composée de q mots, chaque mot est composé de $T*N$ bits et est vu comme un polynôme de degré (T-1) dans $GF(2^N)$. Le champ [champ signalisation] d'une page contient q paquets donnant une information sur une trame de C sélectionnée grâce au paramètre [Page ref]. Chacun de ces q paquets est une évaluation d'un polynôme en un point calculé à partir du paramètre [Page ref],

- pour une session donnée et un message donné C, le centre calcule les pages donnant l'information sur C comme il a été décrit précédemment. Un mode de transmission est, par exemple, obtenu lorsque le centre transmet des pages à plusieurs émetteurs et chaque émetteur transmet au récepteur des pages qui sont différentes de celles transmises par les autres émetteurs.

Une manière simple d'obtenir cette diversité de signaux est de forcer le centre à distribuer différentes pages à différents émetteurs.

Le traitement de la page au niveau d'un récepteur comprend, par exemple, les étapes suivantes :

- la taille N0*T0 de la signalisation est prédéfinie et connue par le récepteur. Le récepteur collecte TO pages, telles que chaque page ne contient aucune erreur (contrôle avec [MAC/CRC]) et chaque page utilise un point différent des autres pages (point calculable à partir de [page ref]). Le récepteur reconstitue la signalisation CO à partir de ces pages en utilisant l'interpolation polynomiale de Lagrange comme il est explicité ci-après,

- grâce à CO, le récepteur connaît la longueur du message C. Il collecte T pages de chaque trame de C (pages sans erreur et en utilisant des points distincts) . Ensuite il reconstitue le message C en utilisant l'interpolation polynomiale de Lagrange.

La suite de la description détaille le choix des paramètres, la signalisation CO, le multiplexage détaillé de C et CO dans les pages utilisant le principe de diversité, et une méthode pour le récepteur pour reconstituer la totalité du message à partir des pages.

**Choix des paramètres**

On note :

- **N_p** le nombre de bits par page qui sont réservés exclusivement pour les données effectives, c'est-à-dire, pour les champs [Champ Signalisation] et [champ message utile],
- **N** un nombre inférieur ou égal au nombre de bits de [Page ref],
- **N0** et **q** sont des nombres tels que **N_p=q*N +N0.**

De façon à avoir un paramètre d'efficacité proche de 1, les paramètres N et N0 seront choisis par exemple pour vérifier :

$$2^{N/2} \geq \frac{|Mot|}{N} = T \text{ et } 2^{N0/2} \geq \frac{|C0|}{N_0} = T0$$

où |C0| est la taille de CO, et |Mot| est la taille d'un mot contenu dans C.

Ces deux conditions ne sont pas obligatoires mais assurent qu'il n'y a pas de collision entre les points sélectionnés de [Page ref], avec une probabilité élevée. La condition la plus importante est la première. La seconde peut être aisément assouplie (TO peut être un peu plus grand que $2^{N0/2}$) car la signalisation CO est la plupart du temps plus courte que le message C.

Dans tous les cas il faut impérativement que $2^N \geq T$ et $2^{N0} \geq T0$ pour assurer que le nombre de symboles du message est inférieur au nombre de total de points. Pour un nombre donné N_p, ces conditions règlent les paramètres N et N0, ainsi que les autres paramètres, i.e, TO si |C0| est fixé, |Mot| et T.

**Format du message C et signalisation C0**

Le message C est divisé en une ou plusieurs trames de q*T*N bits. Pour assurer cette taille de format, le message C est par exemple formatté avec un champ "padding" de taille variable servant de bourrage. Un en-tête donnant la taille du "padding" peut être inclus dans le message C ou dans la signalisation CO.

## Signalisation C0

La longueur |C0| de CO est un multiple de N0. On note **T0** le nombre de parties de N0 bits dans CO, i.e. tel que **|C0|=T0*N0.**

Ce message peut contenir, par exemple, l'information suivante :

| Champs C0 | Description |
|---|---|
| [Type de message] | Code plusieurs types prédéfinis de message |
| [Longueur de C] | Code la longueur du message C (voir ci-dessous) |
| [Information Temporelle sur C] | Indique la date (ou l'heure) de début et de fin de la session pendant laquelle le message C est émis |
| [Padding] | Bourrage (éventuel) permettant d'avoir une taille **|C0|** qui soit un multiple de N0 |
| [MAC] | MAC permettant au récepteur de vérifier que CO a été reçu correctement |

## Champ [Longueur de C]

Un message C est divisé en F trames de q*T*N bits. Les paramètres N et q sont fixes et connus du récepteur. La longueur du message C est donné par les deux champs suivants :

- [taille d'un mot dans C (N/2 bits)] : valeur de T-1, où T est le nombre de symboles de N bits dans un mot, $1 \leq T \leq 2^{N/2}$.

- [nombre de trames dans C] : valeur de F.

## Définition du multiplexage

Les bits d'information de CO et C sont multiplexés dans les $N\_p$ bits des pages en cours.

Le paquet utile de $N\_p$ bits est décomposé en (1+q) parties notées :

M(0), M(1), M(2), ..., M(q).

Dans la suite du document on appelle « N-symbole » un symbole de N bits, celui-ci pouvant être vu comme un élément du corps fini $GF(2^N)$. On définit de-même un « NO-symbole » comme un symbole de N0 bits, pouvant être vu comme un élément du corps fini $GF(2^{N0})$.

La première partie M(0) est un NO-symbole calculé à partir de CO.

Les q autres parties sont calculées à partir d'une trame sélectionnée d'un message C, et chaque partie étant un N-symbole.

Le nombre de bits utiles par page est donc de $N\_p=N0+q*N$.

Le message CO est décomposé en TO parties de N0 bits notés : W(0), W(1), ..., W(T0-1).

Le message C est décomposé en F trames, chaque trame en q mots, chaque mot en T N-symboles.

En notant :

f étant l'index de la trame dans le message, 0 <= f <= F-1 ,

w l'index des mots dans une trame, 0 <= w <= q-1 ,

b l'index des N-symbole dans un mot, 0 <= b <= T-1

Alors un N-symbole courant dans le message C est référencé par C[f][w][b].

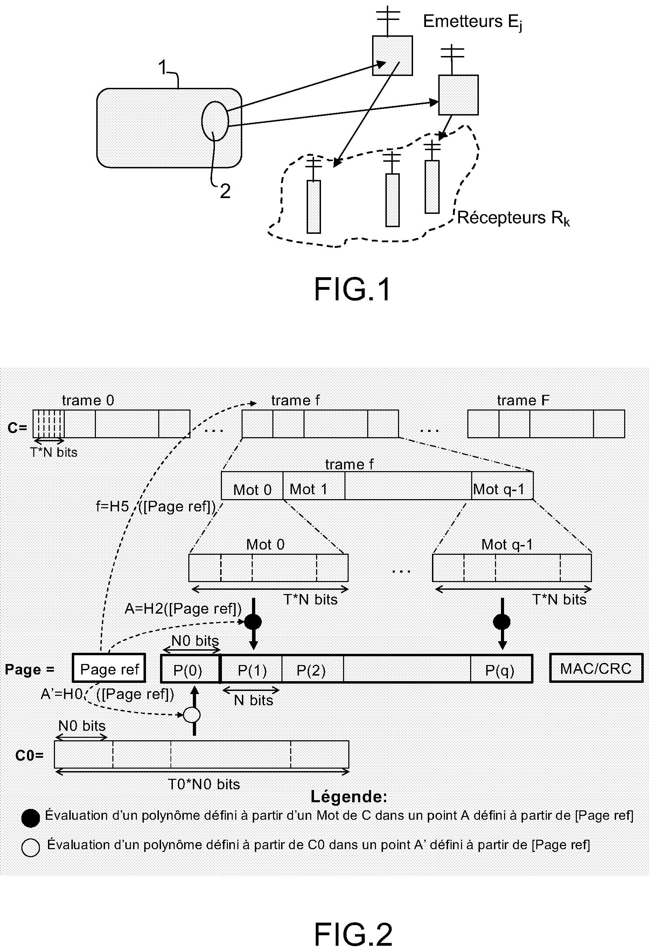

La figure 2 résume le multiplexage défini dans la suite de la description.

## Extraction de l'information de C0 dans la page courante

Soit CO la signalisation courante incluant TO NO-symboles notée :

W(0), W(1), ...,W(T0-1)

Soit A' = HO([Page ref]) un NO-symbole calculé à partir de [Page ref] avec une fonction HO. La fonction HO est, par exemple, telle que HO([Page ref]) est à peu près équidistribué dans l'ensemble des NO-symboles lorsque [page ref] change de manière aléatoire. Le NO-symbole M(0) sur la signalisation enfoui dans la page courante est :

$$M(0) = W(0) + W(1) * A' + W(2) * A'^2 + .... + W(T0-1) * A'^{T0-1}$$

Où tous les NO-symboles sont considérés comme des éléments $GF(2^{N0})$ et des opérations (+, *) sont définies dans ce corps fini.

Remarque : En notant P(X) le polynôme défini par $P(X) = W(0) + W(1) X + W(2) * X^2 + ... + W(T0-1) X^{T0}$ on a en fait défini M(0) comme étant l'évaluation P(A') du polynôme P au point A'.

**Reconstitution de la signalisation C0 au niveau du récepteur :**

Au niveau du récepteur, la signalisation courante CO est récupérée en utilisant les NO-symboles d'information M(0) fournis dans chaque page.

Dès que TO pages sont disponibles et que les valeurs HO([Page ref] sont distinctes, CO est récupéré de la manière suivante :

**A) Entrée pour la récupération de C0**

◦ j, 0 <= j <= TO-1 un index pour les TO pages sélectionnées utilisées pour la récupération de la signalisation courante CO;

◦ $A'_0, A'_1, ..., A'_{T0-1}$ les valeurs distinctes de HO([Page ref]) associées à chaque page sélectionnée (j); 0 <= j <= T0-1;

◦ Z(0), Z(1), ...,Z(T0-1) les TO NO-symboles M(0) dans une page sélectionnée courante j, 0 <= j <= TO-1.

**B) sortie C0**

A partir des données précédentes, on récupère les TO NO-symboles de CO notés :

◦ W(0), ..., W(T0-1)

**C) calcul de la sortie à partir de l'entrée**

Le vecteur de TO NO-symboles (W(0), W(1), ...W(T0-1)) à récupérer est aussi considéré comme un polynôme de $GF(2^{N0})[X]$ de degré TO-1 :

$$P(X) = W(0) + W(1) X + ... + W(T0-1) X^{T0-1}$$

P(X) est récupéré au moyen d'une interpolation comme étant le seul polynôme de degré TO-1 tel que P(A'j) = Z(j), pour 0<=j <= TO-1.

1) avec la famille de TO points $(A'_0, ..., A'_{T0-1})$ on calcule la famille de points TO associés au polynôme de Lagrange. Pour 0 <= j <= TO-1, Lj(X) est l'unique polynôme de degré TO-1 tel que $Lj(A'_k) = 1$ pour k = j et $Lj(A'_k) = 0$ pour k <> j.

$$L_j(X) = B(j) * \text{(le produit de T0-1 monomials } (X - A'_k), \text{ tel que } 0 <= k <= T0-1 \text{ et } k <> j.)$$

B(j) est l'élément de GF($2^{N0}$) qui est l'inverse dans GF($2^{N0}$) du produit de TO-1 éléments ($A'_j - A'_k$), 0 <= k<=TO-1 and k<> j.

2) le vecteur de TO N0-symbols (W(0), ...,W(T0-1)), considérés comme le polynôme P(X), est ensuite calculé de la manière suivante :

$$P(X) = Z(0) * L_0(X) + Z(1) * L_1(X) + \ldots + Z(T0\text{-}1) * L_{T0\text{-}1}(X).$$

**Extraction de l'information de C dans la page courante** :

Soit F le nombre de trame dans C, q le nombre de mots dans une trame et T le nombre de N-symboles dans un mot.

Les paramètres F et T sont calculés à partir du champ "longueur du message" inclus dans la signalisation CO. Le paramètre q est fixe (indépendant du message) et connu du récepteur.

Les q N-symboles M(1)...M(q) de la page courante sont respectivement des informations sur les q mots enfouis dans une trame spécifique de C. L'index de la trame sélectionnée et la nature du N-symbole de l'information sur ses mots sont définis sans ambiguïté avec le paramètre [page ref].

Tout N-symbole (N bits) est considéré aussi comme un élément du corps fini ayant $2^N$ éléments GF($2^N$).

Un N-symbole d'information sur un mot contenant T N-symboles sera une combinaison linéaire de ses T N-symboles considérés dans GF($2^N$).

Plus précisément :

L'index de la trame sélectionnée dans M est : f=H5[page ref].

La fonction H5 est, par exemple, telle que f=H5([page ref]) est à peu près équidistribuée dans [0,... F-1] lorsque [page ref] change de manière aléatoire. Posons A=H2([Page ref]) un N-symbole calculé à partir de [Page Ref] avec une fonction H2..La fonction H2 est, par exemple, telle que H2([Page ref]) est à peu près équidistribué dans l'ensemble des N-symboles lorsque [page ref] change de manière aléatoire.

Soient :

• W(0,0), W(0,1),..., W(0,T-1), les T N-symboles du mot TRAME[f][0] dans la trame concernée f;

• W(1,0), W(1,1),..., W(1,T-1), les T N-symboles du mot TRAME[f][1] dans la trame concernée f;

• ...

• W(q-1,0),...,W(q-1,T-1), les T N-symboles du mot TRAME[f][q-1] dans la trame concernée f

Pour 1 <= j<= q, les N-symboles M(j) sont :

$$M(j)=W(j\text{-}1,0) + W(j\text{-}1,1) * A + W(j\text{-}1,2) * A^2 + \ldots + W(j\text{-}1,T\text{-}1) * A^{T\text{-}1}$$

Où tous les N-symboles sont considérés comme élément de GF($2^N$) et opération (+, *) sont effectués dans ce corps fini.

Comme il est décrit ci-après, dès qu'un récepteur récupère T pages concernant la trame et dont les contenus (M(0),...,M(q-1)) sont distincts , il sera capable de récupérer aisément la trame entière quelque soit la manière dont les pages ont été reçues par le récepteur :

• En écoutant un seul signal,
• En écoutant plusieurs signaux en parallèle,
• Avec plusieurs trous dans le signal écouté ou non.

**Reconstitution d'une trame au niveau du récepteur** :

Au niveau du récepteur, une trame courante de q*T N-symboles, notée TRAME[f], 0 <= f <= F-1, est récupérée en utilisant les pages telles que H5([Page ref])=f.

Dès que T pages sont disponibles et que les valeurs de H2([Page ref]) sont différentes, la trame est récupérée en utilisant une fonction d'interpolation comme il est décrit ci-dessous :

**A) Entrées pour la récupération de la trame courante** :

- j, 0 <= j <= T-1 un index pour les T pages sélectionnées utilisées pour récupérer la trame courante;

- $A_0, A_1, ..., A_{T-1}$ être les valeurs distinctes de H2([Page ref]) associées à chaque page sélectionnée (j); 0 <= j <= T-1 ;

- Z(j,0), Z(j,1), ...,Z(j,q-1) être les q N-symboles M(1), ... M(q) de la page courante sélectionnée j, 0 <= j <= T-1.

**B) Sortie : la trame courante**

Des données précédentes, nous récupérons les q*T N-symboles suivants dans la trame courante TRAME[f] :

- (W(0,0), ..., W(0,T-1)), les T N-symboles du mot TRAME[f][0] dans la trame concernée f,

- (W(k,0), ..., W(k,T-1)), les T N-symboles du mot TRAME[f][k] dans la trame concernée f,

- ...

- (W(q-1,0), ..., W(q-1T-1)) les T N-symboles du mot TRAME[f][q-1] dans la trame concernée f.

**C) Calcul de la sortie à partir de l'entrée**

Chaque mot de T N-symboles (W(k,0), W(k,1), ...W(k,T-1)) à récupérer est aussi considéré comme un polynôme de $GF(2^N)[X]$ de degré T-1 :

$$P_k(X) = W(k,0) + W(k,1) \, X + ... + W(k,T-1) \, X^{T-1}$$

$P_k(X)$ est récupéré par interpolation comme étant l'unique polynôme de degré T-1 tel que $P_k(Aj) = Z(j,i)$, pour 0<=j <= T-1.

1) avec la famille de T points $(A_0, ..., A_{T-1})$ on détermine la famille des T polynômes de Lagrange associés. Pour 0 <= j <= T-1, Lj(X) est l'unique polynôme de degré T-1 tel que Lj(Ak) = 1 pour k = j et Lj(Ak) = 0 pour k <> j.

$$Lj(X) = B(j) * \text{(le produit de T-1 monômes}(X - Ak), \text{ tel que } 0 <= k <= T-1$$
$$\text{et } k <> j.)$$

B(j) est l'élément de $GF(2^N)$ qui est l'inverse dans $GF(2^N)$ du produit de T-1 éléments (Aj-Ak), 0 <= k <= T-1 et k <> j.
2) Le mot courant de T N-symbols (W(k,0), ...,W(k,T-1)), considéré comme le polynôme $P_k(X)$ 0 <= k <= q-1, est ensuite calculé de la façon suivante :

$$P_k(X) = Z(0,k) * L_0(X) + Z(1,k) * L_1(X) + ... + Z(T-1,k) * L_{T-1}(X).$$

$P_k(X)$ est récupéré par interpolation comme étant l'unique polynôme de degré T-1 tel que $P_k(Aj) = Z(j,i)$, pour 0<=j <= T-1.

1) avec la famille de T points $(A_0, ..., A_{T-1})$ on détermine la famille des T polynômes de Lagrange associés. Pour 0 <= j <= T-1, Lj(X) est l'unique polynôme de degré T-1 tel que Lj(Ak) = 1 pour k = j et Lj(Ak) = 0 pour k <> j.

$$Lj(X) = B(j) * (\text{le produit de T-1 monômes}(X - Ak), \text{ tel que } 0 <= k <= T-1$$

$$\text{et } k <> j.)$$

B(j) est l'élément de $GF(2^N)$ qui est l'inverse dans $GF(2^N)$ du produit de T-1 éléments (Aj - Ak), $0 <= k <= T-1$ et $k <> j$.
2) Le mot courant de T N-symbols (W(k,0), ...,W(k,T-1)), considéré comme le polynôme $P_k(X)$ $0 <= k <= q-1$, est ensuite calculé de la façon suivante :

$$P_k(X) = Z(0,k) * L_0(X) + Z(1,k) * L_1(X) + \ldots + Z(T-1,k) * L_{T-1}(X).$$

**Revendications**

**1.** - Procédé pour gérer des interruptions erratiques dans un système de transmission où les messages à transmettre sont composés de paquets de données et sont représentés par un polynôme de degré t-1, les émetteurs et les récepteurs partageant une information permettant de référencer chaque paquet de données, telle qu'une page ou une référence temporelle, le procédé étant tel qu'il comporte au moins les étapes suivantes :

• au cours de la transmission d'un message C représenté par un polynôme P, générer t' points Ai à partir de ladite information permettant de référencer les paquets de données et les évaluations P(Ai) du polynôme P pour les t' points Ai, avec t' supérieur ou égal à t,
• transmettre un message contenant une signalisation CO, la signalisation étant composée de T0*N0 bits et étant vue comme un polynôme de degré (T0-1),
• à la réception collecter TO paquets de données ne contenant pas d'erreur, chaque paquet de données utilisant un point différent des autres paquets de données reconstituer la signalisation CO à partir de ces paquets de données en utilisant une interpolation polynomiale,
• déduire à partir de la signalisation CO, la longueur du message C et la manière dont on a découpé le message C en F trames, chaque trame étant découpée en q mots, chacun des mots étant représenté par un polynôme de degré (T-1),
• pour chaque polynôme correspondant à un mot collecter T évaluations sans erreurs du polynôme, et
• à partir des évaluations P(Ai) et des points Ai reconstituer le message C en utilisant l'interpolation polynomiale.

**2.** - Procédé selon la revendication 1, **caractérisé en ce que** l'on utilise une fonction d'interpolation pour déterminer le polynôme.

**3.** - Procédé selon la revendication 1, **caractérisé en ce que** l'on divise le message en plusieurs parties et on applique les étapes de la revendication 1 sur chaque partie.

**4.** - Procédé selon la revendication 1, **caractérisé en ce que** lors de la détection d'erreur, les évaluations P(Ai) contenues dans un paquet de données erroné sont supprimées et le récepteur reste à l'écoute de nouveaux paquets de données.

**5.** - Procédé selon l'une des revendications 1 à 3, **caractérisé en ce que** lors de la détection d'erreur, les évaluations P(Ai) contenues dans une page erronée sont supprimées et le récepteur reste à l'écoute de nouvelles pages.

**6.** - Procédé selon l'une des revendications 1 à 5, **caractérisé en ce que** le système de transmission comprend un satellite de communication.

**7.** - Système pour gérer des interruptions erratiques dans un système de transmission comprenant un ou plusieurs émetteurs Ej et un ou plusieurs récepteurs Rk, où les messages à transmettre sont composés de paquets de données et s'expriment au moyen d'un polynôme de degré t-1, les émetteurs et les récepteurs partageant une information permettant de référencer les paquets de données, **caractérisé en ce qu'**il comporte au moins les éléments suivants : un centre de formatage (1) et les récepteurs étant pourvus de moyens (2) adaptés à exécuter les étapes du procédé selon l'une des revendications 1 à 6.

**Patentansprüche**

1. Verfahren zum Verwalten von unberechenbaren Unterbrechungen in einem Sendesystem, in dem die zu sendenden Nachrichten aus Datenpaketen zusammengesetzt sind und durch ein Polynom von Grad t-1 repräsentiert werden, wobei die Sender und Empfänger eine Information gemeinsam nutzen, die das Referenzieren jedes Datenpakets wie etwa einer Seite oder einer zeitlichen Referenz zulässt, wobei das Verfahren derart ist, dass es wenigstens die folgenden Schritte beinhaltet:

   • Erzeugen, im Laufe des Sendens einer durch ein Polynom P repräsentierten Nachricht C, von t' Punkten Ai auf der Basis der Information, so dass die Datenpakete und die Beurteilungen P(Ai) des Polynoms P für die t' Punkte Ai referenziert werden können, wobei t' gleich oder größer als t ist,
   • Senden einer Nachricht, die eine Signalisierung C0 enthält, wobei die Signalisierung aus T0*N0 Bits zusammengesetzt ist und als ein Polynom von Grad (T0-1) angesehen wird,
   • beim Empfang erfolgendes Sammeln von T0 Datenpaketen, die keinen Fehler enthalten, wobei jedes Datenpaket einen anderen Punkt der anderen Datenpakete benutzt, Wiederherstellen der Signalisierung C0 auf der Basis dieser Datenpakete unter Nutzung einer Polynom-Interpolation,
   • Ableiten, auf der Basis der Signalisierung C0, der Länge der Nachricht C und der Art und Weise, in der die Nachricht C in F Frames unterteilt wurde, wobei jeder Frame in q Wörter unterteilt ist, wobei jedes der Wörter durch ein Polynom von Grad (T-1) dargestellt wird,
   • Sammeln, für jedes einem Wort entsprechende Polynom, von T fehlerlosen Beurteilungen des Polynoms, und
   • Wiederherstellen, auf der Basis der Beurteilungen P(Ai) und der Punkte Ai, der Nachricht C unter Nutzung der Polynom-Interpolation.

2. Verfahren nach Anspruch 1, **dadurch gekennzeichnet, dass** eine Interpolationsfunktion zum Bestimmen des Polynoms benutzt wird.

3. Verfahren nach Anspruch 1, **dadurch gekennzeichnet, dass** die Nachricht in mehrere Teile unterteilt wird und die Schritte von Anspruch 1 auf jeden Teil angewendet werden.

4. Verfahren nach Anspruch 1, **dadurch gekennzeichnet, dass** bei der Fehlererkennung die in einem falschen Datenpaket enthaltenen Beurteilungen P(Ai) gelöscht werden und der Empfänger weiter auf neue Datenpakete horcht.

5. Verfahren nach einem der Ansprüche 1 bis 3, **dadurch gekennzeichnet, dass** bei der Fehlererkennung die in einer falschen Seite enthaltenen Beurteilungen P(Ai) gelöscht werden und der Empfänger weiter auf neue Seiten horcht.

6. Verfahren nach einem der Ansprüche 1 bis 5, **dadurch gekennzeichnet, dass** das Sendesystem einen Kommunikationssatelliten umfasst.

7. System zum Verwalten von unberechenbaren Unterbrechungen in einem Sendesystem, das einen oder mehrere Sender Ej und einen oder mehrere Empfänger Rk umfasst, wobei die zu sendenden Nachrichten aus Datenpaketen zusammengesetzt sind und durch ein Polynom von Grad t-1 ausgedrückt werden, wobei die Sender und die Empfänger eine Information gemeinsam nutzen, die eine Referenzierung der Datenpakete zulässt, **dadurch gekennzeichnet, dass** es wenigstens die folgenden Elemente umfasst: ein Formatierungszentrum (1), und wobei die Empfänger mit Mitteln (2) ausgestattet sind, die zum Ausführen der Schritte des Verfahrens nach einem der Ansprüche 1 bis 6 ausgelegt sind.

**Claims**

1. A method for managing erratic interruptions in a transmission system where the messages to be transmitted are composed of data packets and are represented by a polynomial of degree t-1, the transmitters and receivers sharing information allowing referencing of each data packet, such as a page or a time reference, the method being **characterised in that** it comprises at least the following steps:

   • generating, during the transmission of a message C represented by a polynomial P, t' points Ai on the basis of said information allowing referencing of the data packets and the evaluations P(Ai) of the polynomial P for the t' points Ai, with t' being greater than or equal to t;
   • transmitting a message containing a signal C0, the signal being composed of T0*N0 bits and being seen as a polynomial of degree (T0-1);

• collecting, on reception, T0 data packets not containing any errors, each data packet using a different point from the other data packets, reconstructing the signal C0 on the basis of said data packets using a polynomial interpolation;

• deducing, on the basis of the signal C0, the length of the message C and how the message C has been divided into F frames, each frame being divided into q words, each word being represented by a polynomial of degree (T-1);

• collecting T error-free evaluations of the polynomial for each polynomial corresponding to a word; and

• reconstructing, on the basis of the evaluations P(Ai) and of the points Ai, the message C using the polynomial interpolation.

2. The method according to claim 1, **characterised in that** an interpolation function is used to determine the polynomial.

3. The method according to claim 1, **characterised in that** the message is divided into a plurality of parts and the steps of claim 1 are applied to each part.

4. The method according to claim 1, **characterised in that**, during error detection, the evaluations P(Ai) contained in an erroneous data packet are deleted and the receiver continues listening for new data packets.

5. The method according to any one of claims 1 to 3, **characterised in that**, during error detection, the evaluations P(Ai) contained in an erroneous page are deleted and the receiver continues listening for new pages.

6. The method according to any one of claims 1 to 5, **characterised in that** the transmission system comprises a communication satellite.

7. A system for managing erratic interruptions in a transmission system comprising one or more transmitters Ej and one or more receivers Rk, where the messages to be transmitted are composed of data packets and are expressed by means of a polynomial of degree t-1, the transmitters and receivers sharing information allowing referencing of the data packets, **characterised in that** it comprises at least the following elements: a formatting centre (1) and the receivers being provided with means (2) adapted to execute the steps of the method according to any one of claims 1 to 6.

FIG.1

FIG.2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- An introduction to Reed-Solomon codes. **STEPHEN B.WICKLER.** Reed-Solomon Codes and their Applications. Wiley -IEEE Press, Septembre 1999, 1-16